# EUROPEAN PATENT SPECIFICATION

(11) **EP 2 810 554 B1**
(45) Date of publication and mention of the grant of the patent: **04.05.2016**
(21) Application number: 14171393.3
(22) Date of filing: 05.06.2014
(51) Int. Cl.: A01K 31/12, A01M 1/22

(54) **A device for controlling bird mite**
Gerät zum bekämpfen von Vogelmilben
Appareil contre des acariens d'oiseaux

(30) Priority: 06.06.2013 NL 2010930
(43) Date of publication of application: 10.12.2014
(73) Proprietor: Van de Ven Beheer B.V., 5521 DZ Eersel (NL)
(72) Inventor: van de Ven, Dick Hendrikus Cornelis, 5521 HE Eersel (NL)
(74) Representative: Verhees, Godefridus Josephus Maria

(56) References cited:
- DE-A1- 19 544 117
- US-A- 4 471 561

## Description

### Field of the invention

The invention relates to a device for combating bird mite, comprising an oblong either flexible or not carrier of electro-insulating material, as well as two parallel oblong electrical conductors located on the carrier and spaced apart from each other, which conductors are provided with a non-insulated side. If vermin crosses the electrical conductors, it makes contact with both conductors so that a current passes through the vermin. The device is therefore to be installed at locations that are passed by vermin.

Bird mites primarily live on bird blood and are 0.6 - 1.2 mm in length and colorless to reddish. The bird mites often live in vast numbers in birds' living quarters such as - birds' nests - bird cages - poultry farms - pigeon cotes - aviaries or bird houses etc. They are lucifugous and during the day they hide in all sorts of hidden spaces such as seams, cracks, slits, interstices and behind insulation boards. During the night they emerge to fetch a meal of blood from the birds. So they are not carried along by the birds; the birds merely serve as a food source. In case of serious inconvenience this is utterly irritating for broody hens and this will often cause them to leave their nests. Young birds may die of loss of blood.

Bird mites may be the cause of anaemia with broody hens. Emaciated animals, low egg production and lower resistance to infections are among the symptoms. Broody hens also become restless because of bird mites and their feathers may become roughened. This may degrade into feather plucking and cannibalism. The eggs may also have blood spots because of the eggs rolling over the bird mites. This is an undesired phenomenon.

### State of the art

A device of the type defined in the opening paragraph is known from DE19544117A. The carrier of this known device is arranged as a flexible tape that can be fitted to an object. The electrical conductors are planar while an insulation layer is located on part of the top side of the carrier such that the chance of humans or animals standing on the conductors and coming into contact with the non-insulated part of the conductors is strongly reduced.

If the known device is utilized for combating bird mite, the distance between the electrical conductors is to be small. This increases the chance of spark over. Spark over is particularly undesired in dusty environments such as poultry barns because that is where there is an increased danger of fire or explosion because of this.

### Summary of the invention

It is an object of the invention to provide a device of the type defined in the opening paragraph where during the combating of bird mites there is less danger of spark over than with the known device. For this purpose the device according to the invention is characterized in that the distance between the non-insulated side of the electrical conductors is less than or equal to 1.2 mm, and the device further includes a power supply which is provided with connecting means through which the power supply is connected to the electrical conductors, and further includes a power source or further connecting means for connection to an external power source, which power supply is arranged such that during operation a minimum 100 V voltage is applied to the connecting means and the voltage applied to the connecting means is less than or equal to 800 V per mm inter-conductor distance. This voltage may be both a direct voltage and an alternating voltage. Since the distance between the conductors is less than 1.2 mm, at least the mature bird mites make contact with both conductors when they pass the conductors, as a result of which they are electrocuted. The voltage is to be at least 100 V to bridge the transitional resistance between the conductors and the legs or antennae of the bird mites. In case of a voltage not exceeding 800 V per mm inter-conductor distance, for most applications there is an acceptably slight chance that spark over will take place. Spark over damages the conductors and causes irregularities (pits) to develop. During spark over there is no voltage present either, so that the device will not operate for a brief period of time. By avoiding or at any rate minimizing spark over, these disadvantages will not be experienced.

The distance between the electrical conductors is preferably less than or equal to 0.7 mm, so that also mature bird mites are eliminated (killed or maimed). Furthermore, the power supply is preferably arranged such that an at least 230 V voltage is applied across the connecting means to even better bridge the transitional resistance, which leads to more bird mites being electrocuted while they cross the conductors.

An embodiment of the device where the chance of spark over has been minimized to nearly zero is characterized in that the voltage applied across the connecting means is less than or equal to 500 V per mm inter-conductor distance.

For reducing the hazard for humans or animals when they come into contact with the electrical conductors, a further embodiment of the device according to the invention is characterized in that the voltage applied across the connecting means is alternately present and absent. The open voltage which is required for bridging the transitional resistance from electrodes to the legs and antennae of the bird mites is thus maintained, while the developed power is thereby proportionately reduced so that any touching of the conductors by humans and animals is less serious, but still large enough to eliminate the bird mites. Any danger of fire is reduced by this too. Fouling as a result of dead bird mites and further pollutions having too high a dissipated power drop off the device and may land on the hen or on inflammable base material.

The voltage applied across the connecting means is preferably present for 20 - 33% of the time and absent for 80 - 67% of the time. The voltage having a frequency between 500 and 2000 Hz is preferably applied across the connecting means.

An advantageous embodiment of the device according to the invention is characterized in that the non-insulated side of the conductors is planar. As a result, the electrocuted bird mites can easily drop off the conductors and the conductors can be cleaned well.

A further advantageous embodiment of the device according to the invention is characterized in that the electrical conductors are embedded in the carrier such that the non-insulated side of the conductors has a seamless transition to the side of the adjoining parts of the carrier. As a result, no new breeding spots for the bird mites are created and the killed bird mites drop even sooner from the conductors, and the device can be cleaned even better when the device according to the invention is utilized.

The electrical conductors preferably comprise each an oblong metal wire in a sheath made of plastic, preferably silicon rubber, with contained therein particles of electrically conducting material such as, for example, graphite, silver, stainless steel. The use of plastic and notably silicon rubber makes a seamless transition possible between the carrier and the conductors. The metal conductors are necessary to maintain the resistance in longitudinal direction at a low level. With this construction there is only one transition of material. Spots where there is transition of material generally form breeding grounds for bird mites. Since the transition of material is a seamless one in this construction, in the device according to the invention there are no places left that can serve as breeding grounds for bird mites. In addition, this material is fire and spark-resistant.

In an advantageous embodiment of the device according to the invention the carrier is a flexible tape so that the device can be fastened to existing objects. In another advantageous embodiment the device comprises a roost to which the carrier is fastened. Preferably, the carrier is present here on a downward facing roost surface, so that the killed bird mites drop off the conductors in an even better way.

### Brief description of the drawings

The invention will be elucidated more fully below based on examples of embodiment of the device according to the invention while reference is made to the appended drawing figures, in which:
Fig. 1 shows a first embodiment of the device according to the invention where the carrier is arranged as a flexible tape;
Fig. 2 shows a second embodiment of the device according to the invention arranged as a chicken roost to which the carrier shown in Fig. 1 covered with electrical conductors is fastened; and
Fig. 3 shows a cross sectional view of the roost shown in Fig. 2.

### Detailed description of the drawings

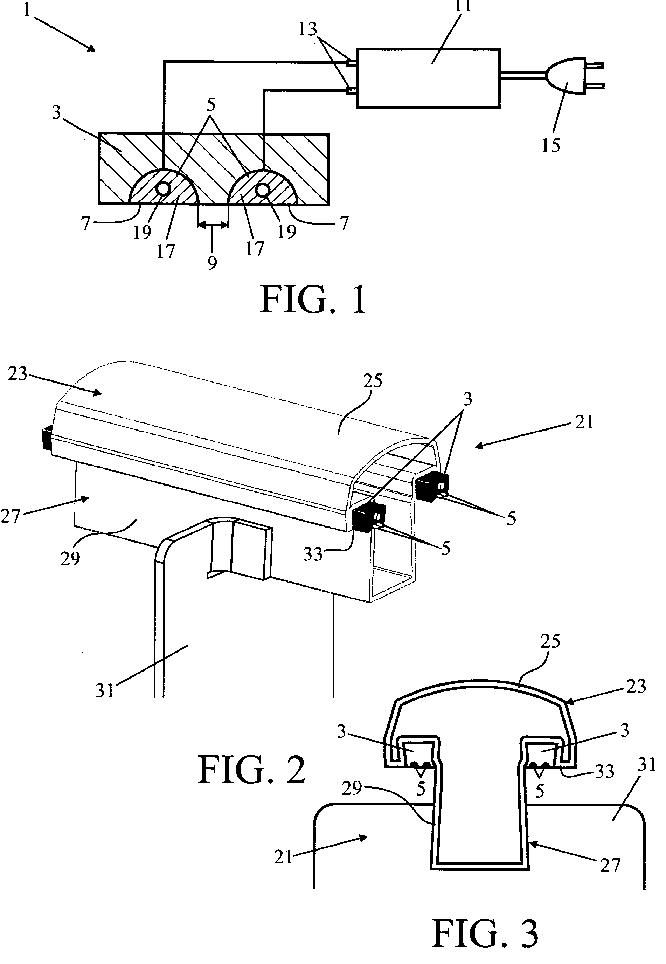

Fig. 1 shows a first embodiment of the device according to the invention where the carrier is arranged as a flexible tape. The device 1 comprises an oblong flexible carrier 3 made of electro-insulating material, as well as two parallel, oblong electrical conductors 5 present on the carrier and spaced apart from each other, provided with one non-insulated side 7. The distance 9 between the non-insulated side of the electrical conductors is approximately 0.6 mm. The device frurther includes a power supply 11 which is provided with connecting means 13 through which the power supply is connected to the electrical conductors 5, and further connecting means 15 for connection to an external power source.

The power supply 11 is arranged such that during operation there is a 250 V voltage across the connecting means 13 as a result of which the voltage fed across the connecting means is approximately equal to 417 V per mm inter-conductor distance. This voltage is alternately present and absent, while the voltage having a 1000 Hz frequency is present for 20 - 33% of the time and absent for 80 - 67% of the time.

The operation of the device is as follows. An electric voltage is applied to the conductors, so that there is a so-termed open voltage across these conductors. If a bird mite simultaneously touches these two conductors with its legs or antennae, an electric current will start flowing. As a result, the open voltage drops and is called residual voltage. The current times residual voltage is the power entering the bird mite and killing the bird mite. This results in burnt ligaments and dried and evaporated bird mites.

Since the bird mites establish a connection between the conductors, the supply voltage will drop, but this rises again after some time according as the remainders of the bird mites dry out and thus the resistance of the remainders rises again. Thus the device corrects itself. An additional advantage is that since the remainders dry out, they can easily be removed from the cable (almost as dust) and many remainders drop off by themselves (or as a result of air flows and/or vibrations coming from the movement of the chickens).

The electrical conductors 5 are embedde in the carrier 3 such that the non-insulated side 7 of the conductors seamlessly connects to the side of the adjoining parts of the carrier. The electrical conductors are made of silicon rubber 17 with contained therein particles of electrically conductive material such as, for example, graphite, silver, stainless steel. This rubber material envelops an oblong metal wire 19 for reducing the resistance in longitudinal direction of the conductor.

Figs. 2 and 3 show a second embodiment of the device according to the invention in a perspective and cross sectional view, respectively. This device comprises a roost 21 for chickens as well as the carrier 3 shown in Fig. 1 having electrical conductors 5 fastened to the roost. The roost 21 has a primarily T-shaped mushroom-like cross section whose top part forms the seating section 23 whose top surface forms the seating area 25 for the animals and whose vertical part 27 is mounted on mounting surface supports and to this end is equipped with a mounting face 29. As a result, bird mites can crawl to the seating area and thus to the animals only via the mounting surface supports and via the bottom of the seating section.

To avoid bird mites crawling up to the animals, the electrical conductors 5 are present at the bottom 33 of the seating section on either side and extending over the entire length of the roost. During operation a voltage difference is created between the two electrical conductors. The distance between the two electrical conductors is preferably smaller than the length of a bird mite to be combated, so that a bird mite crawling on the conductors towards the animals sitting on the roost simultaneously comes into contact with the two conductors and is then electrocuted. Thus these electrical conductors 5 form a barrier around the mounting surface 29 of the roost so that bird mites cannot crwal up to the seating section of the roost via the mounting surface supports. By attaching the conductors to the bottom 33 of a downward facing surface of the seating section 23, it is avoided that the animals sitting on the roosts come into contact with the electrical conductors.

Albeit the invention has been described in the foregoing with reference to the drawings, it should be pointed out that the invention is not by any manner or means restricted to the embodiments shown in the drawings. The invention also extends over any embodiment deviating from the embodiment shown in the drawing Figures within the scope defined by the claims.

## Claims

1. A device for combating bird mite, comprising an oblong either flexible or not carrier of electro-insulating material, as well as two parallel oblong electrical conductors located on the carrier and spaced apart from each other, which conductors are provided with a non-insulated side, **characterized in that** the distance between the non-insulated side of the electrical conductors is less than or equal to 1.2 mm, and the device further includes a power supply which is provided with connecting means through which the power supply is connected to the electrical conductors, and further includes a power source or further connecting means for connection to an external power source, which power supply is arranged such that during operation a minimum 100 V voltage is applied to the connecting means and the voltage applied to the connecting means is less than or equal to 800 V per mm inter-conductor distance.

2. A device as claimed in claim 1, **characterized in that** the inter-conductor distance is less than or equal to 0.7 mm.

3. A device as claimed in claim 1 or 2, **characterized in that** the power supply is arranged such that the voltage applied across the connecting means is at least 230 V.

4. A device as claimed in claim 1, 2 or 3, **characterized in that** the voltage applied across the connecting means is less than or equal to 500 V per mm inter-conductor distance.

5. A device as claimed in any one of the preceding claims, **characterized in that** the voltage applied across the connecting means is alternately present and absent.

6. A device as claimed in claim 5, **characterized in that** the voltage applied across the connecting means is present for 20 - 33% of the time and absent for 80 - 67% of the time.

7. A device as claimed in claim 5 or 6, **characterized in that** the voltage having a frequency between 500 and 2000 Hz is applied across the connecting means.

8. A device as claimed in any one of the preceding claims, **characterized in that** the non-insulated side of the conductor is planar.

9. A device as claimed in any one of the preceding claims, **characterized in that** the electrical conductors are embedded in the carrier such that the non-insulated side of the conductors have a seamless transition to the side of the adjoining parts of the carrier.

10. A device as claimed in any one of the preceding claims, **characterized in that** the electrical conductors comprise each an oblong metal wire in a sheath made of plastic, with contained therein particles of electrically conducting material.

11. A device as claimed in any one of the preceding claims, **characterized in that** the carrier is a flexible tape.

12. A device as claimed in any one of the preceding claims, **characterized in that** the device comprises a roost to which the carrier is attached.

13. A device as claimed in claim 12, **characterized in that** the carrier is present on a downward facing surface of the roost.

## Patentansprüche

1. Vorrichtung zur Bekämpfung der Vogelmilbe, die einen langgestreckten, starren oder flexiblen Träger aus elektrisch isolierendem Material sowie zwei parallel angeordnete, im Abstand zueinander auf dem Träger befindliche langgestreckte Stromleiter umfasst, die mit einer nicht isolierenden Seite versehen sind, **dadurch gekennzeichnet, dass** der Abstand zwischen den Stromleitern auf der nicht isolierten Seite kleiner oder gleich 1,2 mm ist und die Vorrichtung ferner eine Stromversorgung umfasst, die mit Anschlussmitteln versehen ist, mittels derer die Stromversorgung an die Stromleiter angeschlossen ist, und ferner mit einer Stromquelle oder mit weiteren Anschlussmitteln für den Anschluss an eine externe Stromquelle versehen ist, wobei die Stromversorgung so ausgeführt ist, dass während des Betriebs eine Spannung von mindestens 100 V an den Anschlussmitteln anliegt und die an den Anschlussmitteln anliegende Spannung kleiner oder gleich 800 V pro mm Abstand zwischen den Leitern ist.

2. Vorrichtung nach Anspruch 1, **dadurch gekennzeichnet, dass** der Abstand zwischen den Stromleitern kleiner oder gleich 0,7 mm ist.

3. Vorrichtung nach einem der Ansprüche 1 oder 2, **dadurch gekennzeichnet, dass** die Stromversorgung so ausgeführt ist, dass an den Anschlussmitteln eine Spannung von mindestens 230 V anliegt.

4. Vorrichtung nach einem der Ansprüche 1, 2 oder 3, **dadurch gekennzeichnet, dass** die an den Anschlussmitteln anliegende Spannung kleiner oder gleich 500 V pro mm Abstand zwischen den Leitern ist.

5. Vorrichtung nach einem der vorangegangenen Ansprüche, **dadurch gekennzeichnet, dass** die an den Anschlussmitteln anliegende Spannung wechselweise angeschaltet wird.

6. Vorrichtung nach Anspruch 5, **dadurch gekennzeichnet, dass** die an den Anschlussmitteln anliegende Spannung 20 bis 33 Prozent der Zeit angeschaltet und 80 bis 67 Prozent der Zeit abgeschaltet ist.

7. Vorrichtung nach einem der Ansprüche 5 oder 6, **dadurch gekennzeichnet, dass** die an den Anschlussmitteln anliegende Spannung eine Frequenz zwischen 500 und 2.000 Hz aufweist.

8. Vorrichtung nach einem der vorangegangenen Ansprüche, **dadurch gekennzeichnet, dass** die nicht isolierte Seite der Stromleiter eben ist.

9. Vorrichtung nach einem der vorangegangenen Ansprüche, **dadurch gekennzeichnet, dass** die Stromleiter so in den Träger eingebettet sind, dass ein nahtloser Übergang zwischen der nicht isolierten Seite der Leiter und der Seite der daneben befindlichen Teile des Trägers gegeben ist.

10. Vorrichtung nach einem der vorangegangenen Ansprüche, **dadurch gekennzeichnet, dass** jeder der Stromleiter einen langgestreckten Metalldraht in einer Umhüllung aus Kunststoff umfasst, der Teilchen eines elektrisch leitenden Materials enthält.

11. Vorrichtung nach einem der vorangegangenen Ansprüche, **dadurch gekennzeichnet, dass** es sich bei dem Träger um ein flexibles Band handelt.

12. Vorrichtung nach einem der vorangegangenen Ansprüche, **dadurch gekennzeichnet, dass** die Vorrichtung eine Sitzstange umfasst, an der der Träger angebracht ist.

13. Vorrichtung nach Anspruch 12, **dadurch gekennzeichnet, dass** sich der Träger auf einer nach unten zeigenden Fläche der Sitzstange befindet.

## Revendications

1. Dispositif destiné à combattre la dermanysse des volailles, comprenant un long support de matériel électrique isolant, flexible ou non, ainsi que deux longs conducteurs électriques parallèles, espacés l'un de l'autre, placés sur le support et comportant une face non isolée, **caractérisé en ce que** l'écart entre les deux faces non isolées des conducteurs électriques est inférieur ou égal à 1,2 mm, et **en ce que** le dispositif comprend en outre une alimentation électrique équipée de circuits d'interconnexion permettant de connecter l'alimentation électrique aux conducteurs et est en outre équipée d'une source d'alimentation ou d'autres circuits d'interconnexion pour le raccordement à une source d'alimentation externe, laquelle alimentation est telle que pendant le fonctionnement il existe une tension aux bornes des moyens de connexion d'au moins 100 V et que la tension au bornes est inférieure ou égale à 800 V par mm d'écart entre les conducteurs.

2. Dispositif selon la revendication 1, **caractérisé en ce que** l'écart entre les conducteurs électriques est inférieur ou égal à 0,7 mm.

3. Dispositif selon la conclusion 1 of 2, **caractérisé en ce que** l'alimentation est telle qu'il existe une tension aux bornes d'au moins 230 V.

4. Dispositif selon la revendication 1, 2 ou 3, **caractérisé en ce que** le voltage de la tension électrique aux bornes des moyens de connexion est inférieur ou égal à 500 V par mm d'écart entre les conducteurs.

5. Dispositif selon l'une des revendications ci-avant, **caractérisé en ce que** la tension électrique aux bornes des moyens de connexion est intermittente.

6. Dispositif selon la revendication 5, **caractérisé en ce que** la tension électrique aux bornes existe de 20 à 33% et est absente de 80 à 67%.

7. Dispositif selon la revendication 5 ou 6, **caractérisé en ce que** la tension électrique de fréquence située entre 500 et 2000 Hz est appliquée aux bornes des moyens de connexion.

8. Dispositif selon l'une des revendications ci-avant, **caractérisé en ce que** la face non isolée des conducteurs est plate.

9. Dispositif selon l'une des revendications ci-avant, **caractérisé en ce que** les conducteurs électriques sont encastrés dans le support de telle sorte que la face non isolée des conducteurs corresponde parfaitement à la face des parties connexes du support.

10. Dispositif selon l'une des revendications ci-avant, **caractérisé en ce que** les conducteurs électriques comportent chacun un long fil métallique gainé de plastique et contenant des parties d'un matériau conducteur.

11. Dispositif selon l'une des revendications ci-avant, **caractérisé en ce que** le support est une bande flexible.

12. Dispositif selon l'une des revendications ci-avant, **caractérisé en ce que** le dispositif comporte un juchoir sur lequel est monté le support.

13. Dispositif selon la revendication 12, **caractérisé en ce que** le support est monté sur une surface du juchoir orientée vers le bas.
